# EUROPÄISCHE PATENTSCHRIFT

(11) **EP 3 799 083 B1**
(45) Veröffentlichungstag und Bekanntmachung des Hinweises auf die Patenterteilung: **17.07.2024**
(21) Anmeldenummer: 19306240.3
(22) Anmeldetag: 30.09.2019
(51) Int. Cl.: H01B 13/016, H01B 13/26, B23K 9/025, B21C 37/08

(54) **VERFAHREN ZUR HERSTELLUNG VON KOAXIALKABELN MIT EINEM DÜNNWANDIGEN, RADIAL GESCHLOSSENEN ÄUSSEREN LEITER**
METHOD FOR PRODUCING COAXIAL CABLES WITH A THIN-WALLED RADIALLY CLOSED OUTER CONDUCTOR
PROCÉDÉ DE FABRICATION DE CÂBLES COAXIAUX POURVUS DE CONDUIT EXTÉRIEUR, RADIALEMENT FERMÉE, À PAROI MINCE

(43) Veröffentlichungstag der Anmeldung: 31.03.2021
(73) Patentinhaber: Nexans, 92400 Courbevoie (FR)
(72) Erfinder: EGERER, Ralf, 30177 HANNOVER (DE); PETERSEN, Olaf, 30177 HANNOVER (DE); DINKEL, Steven, 30625 HANNOVER (DE)
(74) Vertreter: Ipsilon

(56) Entgegenhaltungen:
- JP-A- H09 220 682
- US-A- 5 515 603
- US-A1- 2015 162 729
- US-A1- 2017 312 854
- MOHAMMED NAEEM: "Laser processing of reflective materials", 31 January 2013 (2013-01-31), XP055674407, Retrieved from the Internet <URL:https://onlinelibrary.wiley.com/doi/pdfdirect/10.1002/latj.201390001> [retrieved on 20200306]

## Beschreibung

### Gebiet

Die Erfindung betrifft die Herstellung von Koaxialkabeln mit einem äußeren Leiter aus NE-Metallen, insbesondere die kontinuierliche Herstellung solcher Kabel mit dünnwandigen Außenleitern.

### Hintergrund

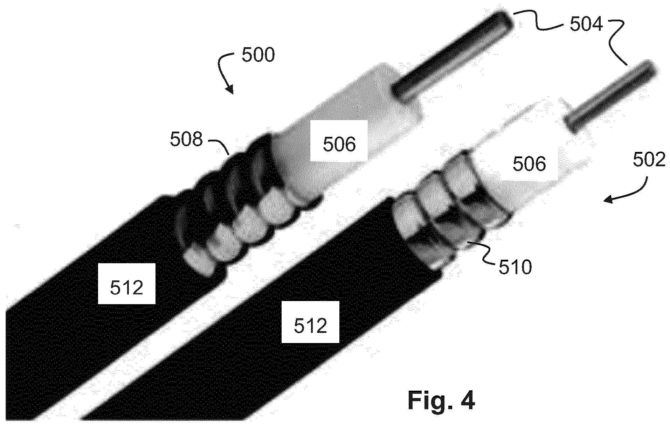

Dünnwandige, radial geschlossene Hohlprofile, insbesondere mit kreisförmigem Querschnitt, können als äußere Leiter von HF-Kabeln bzw. Koaxialkabeln genutzt werden. Im Zentrum eines solchen Hohlprofils ist dann ein von einem Dielektrikum ummantelter innerer Leiter angeordnet. Das Dielektrikum kann bspw. einen Kunststoff mit einer geeigneten relativen Dielektrizitätskonstante umfassen, es ist aber auch möglich, den inneren Leiter im Wesentlichen nur durch Luft oder ein anderes elektrisch nicht leitenden Gas bestehen von dem äußeren Leiter zu trennen. Hierzu kann der innere elektrische Leiter mittels in Abständen angeordneten Abstandshaltern in der Mitte des Hohlprofils gehalten werden, oder es kann ein großporig geschäumter Kunststoff verwendet werden, der überwiegend Luft oder das Gas enthält. Um eine bessere Biegsamkeit des Koaxialkabels zu erreichen, die für eine Verlegung in unterschiedliche Richtungen mit möglichst kleinen Biegeradien erforderlich ist, und gleichzeitig einen formstabilen äußeren Leiter zu erhalten, wird der äußere Leiter des Koaxialkabels mit einer schraubenförmigen oder parallelen Wellung versehen, wie in Figur 4 beispielhaft dargestellt. Der Wellprozess erfordert eine möglichst gleichmäßige Wandstärke des den äußeren Leiter bildenden Hohlprofils, gleichzeitig ist eine möglichst dünne Wandstärke aus Gründen der Material- und Kostenersparnis wünschenswert. Außerdem ist es wünschenswert, dass der äußere Leiter in einem kontinuierlichen Prozess hergestellt wird, um größere zusammenhängende Längen von Koaxialkabeln herstellen zu können.

Bei einem kontinuierlichen Prozess zur Herstellung von Koaxialkabeln wird ein Kabelkern bestehend aus Innenleiter und Dielektrikum einem Rohrformprozess zugeführt. In dem Rohrformprozess wird ein Flachband aus einem NE-Metall, z.B. Kupfer, zu einem in Längsrichtung geschlitzten Rohr geformt, welches den Kabelkern ummantelt. Das zu einem Rohr geformte Flachband wird entlang des Schlitzes Längsnahtverschweißt und anschließend gewellt.

Die Schweißung erfolgt mittels Lichtbogenverfahren wie Wolfram-Inertgas-Schweißen (WIG). Hierdurch lassen sich jedoch Wandstärken kleiner als 0,15 mm nicht prozesssicher schweißen. Die mit dem bekannten Lichtbogenverfahren geschweißten Rohre zeigen zudem eine ausgeprägte Schweißwulst, die in das Rohrinnere hineinragt, und die die elektromagnetischen Eigenschaften des Koaxialkabels negativ beeinflusst. Ferner sind Rohre mit einem Schweißdurchmesser von kleiner Ø 4,0 mm mit dem bekannten Verfahren nicht herstellbar. Hierdurch wird die Dimensionierung des den äußeren Leiter bildenden Wellrohres nach unten hin begrenzt und damit auch der Mindestdurchmesser der Koaxialkabel. Dies führt wiederum zu einem größeren Mindestbiegeradius des Koaxialkabels.

Für bestimmte Anwendungen sind Hohlprofile aus Nichteisenmetallen (NE-Metallen) besonders geeignet, z.B. Kupfer oder Aluminium. Insbesondere Kupferrohre können auch als elektrische Schirme oder äußere Leiter in Koaxialkabeln oder für Hohlleiter verwendet werden. In Koaxialkabeln werden dünnwandige Hohlprofile mit vergleichsweise kleinen Durchmessern und mit kleinen Wandstärken benötigt, unter anderem um den Materialeinsatz und das Gewicht gering zu halten. Insbesondere Wandstärken kleiner als 0,15 mm lassen sich, unabhängig von dem Durchmesser des Rohres, mittels Lichtbogenschweißen nicht mehr prozesssicher und mit der erforderlichen Qualität der Schweißnaht herstellen. Hohlprofile aus NE-Metallen mit kleineren als den genannten Wandstärken und Durchmessern müssen demnach zwingend durch sich an die eigentliche Rohrherstellung anschließende Verarbeitungsschritte auf das jeweils gewünschte Endmaß gebracht werden. Da bei der kontinuierlichen Herstellung von langen Koaxialleitungen der innere Leiter und die Isolierung bereits vor dem Verschweißen in das zu einem geschlitzten Hohlprofil geformte flache Band aus NE-Metall eingebracht werden muss, sind nach dem Verschweißen keine Ziehprozesse zur Verringerung der Wanddicke mehr nutzbar. Das Hohlprofil muss also bereits aus Material mit der gewünschten Wandstärke hergestellt werden.

Aus der Patentschrift US 5515603 ist ein Verfahren zur Herstellung eines Koaxialkabels bekannt, bei dem ein von einem Dielektrikum umhüllter Innenleiter in einen Außenleiter eingebracht wird, welcher aus einem flachen Metallstreifen durch Umformen hergestellt und kontinuierlich längs verschweißt wird. Der Innenleiter liegt dabei zunächst lose in dem nach dem Verschweißen geschlossenen Hohlprofil. Erst nach einem sich an das Verschweißen anschließenden Ziehprozess, bei dem die Querschnittsabmessungen reduziert werden, bis sie an dem den Innenleiter umhüllenden Dielektrikum anliegen, ist der Koaxialleiter fertiggestellt.

In dem Fachartikel "Laser Processing of Reflective Materials" von Mohammed Naeem, erschienen im Laser Technik Journal, No. 1, Januar 2013, S. 18 - 20, werden unterschiedliche Absorptionsgrade von Metallen diskutiert, darunter auch NE-Metalle, insbesondere im Hinblick auf die benötigten Leistungen für Schweiß- und Schneidanwendungen. Außerdem diskutiert der Fachartikel die Temperaturabhängigkeit der Absorption und die Unterstützung von Laserschneidvorgängen durch Gase, z.B. Sauerstoff.

Aus der Offenlegungsschrift JPH 09-220 682 A1 ist ein Verfahren zum Schweißen von Edelstahl mittels Laser offenbart, wobei Schutzgase wie z.B. Helium und Stickstoff bzw. Mischungen davon genutzt werden, um eine unerwünschte Oxidation des Edelstahls im Bereich der Schweißnaht zu verhindern.

Aus der Offenlegungsschrift US 2017/0312854 A1 sind ein Verfahren und eine Vorrichtung zur Herstellung von Metallrohren aus flachen Metallstreifen nach einer entsprechenden Umformung und Längsnahtverschweißen bekannt. Bei dem bekannten Verfahren wird der Schweißbereich zunächst von dem Laser mit einer geringeren Leistung erwärmt, und erst in einem zweiten Durchgang bei einer höheren Laserleistung verschweißt. Der Vorschub erfolgt dabei nichtkontinuierlich abschnittsweise.

Die Offenlegungsschrift US 2015/0162729 A1 offenbart eine Vorrichtung zur Entfernung von isolierenden Kunststoffschichten um einen elektrischen Leiter mittels eines Lasers, der blaues oder ultraviolettes Licht mit Wellenlängen zwischen 400 nm und 460 nm ausstrahlt. Die Isolierschicht wird mittels des Lasers über den Umfang des elektrischen Leiters eingeschnitten. Eine Überwachungsvorrichtung ist vorgesehen, um eine Beschädigung des elektrischen Leiters durch den Laserstrahl zu verhindern.

Grundsätzlich ist es von Vorteil, wenn Koaxialleiter in einem weitgehend kontinuierlichen Herstellungsprozess hergestellt werden, der so selten wie möglich unterbrochen werden muss, um möglichst lange Teilstücke zu erhalten. Aus den langen Koaxialleitern können dann ggf. Teilstücke einer benötigten Länge geschnitten werden, wobei wenn überhaupt nur ein kleiner Schnittrest übrigbleibt. Allgemein ist natürlich jede Einsparung von Prozessschritten bei der Herstellung vorteilhaft.

Es ist daher eine Aufgabe der Erfindung, ein Verfahren anzugeben, welches die zur kontinuierlichen Herstellung großer Längen von Koaxialkabeln benötigte Materialmenge reduziert und ein verringertes Gewicht des Kabels ermöglicht.

### Zusammenfassung der Erfindung

Diese Aufgabe wird durch das in Anspruch 1 angegebene Verfahren gelöst. Weiterentwicklungen und Ausgestaltungen sind in den abhängigen Ansprüchen angegeben.

Bei dem erfindungsgemäßen Verfahren zur kontinuierlichen Herstellung von dünnwandigen Koaxialkabeln, insbesondere auch kleinen Querschnitts, wird zunächst ein flaches Band aus einem NE-Metall zugeführt, dessen Dicke der Wandstärke des äußeren Leiters des herzustellenden Koaxialkabels entspricht. Die Breite des zugeführten Metallbandes entspricht vorzugsweise bereits dem Umfang des äußeren Leiters des Koaxialkabels. Falls das zugeführte Metallband breiter ist als es der Umfang des äußeren Leiters des Koaxialkabels erfordert, oder falls die Kanten des Metallbandes nicht hinreichend glatt sind, kann das Metallband an einer oder zwei Seiten in einem kontinuierlichen Prozess während des Zuführens maßgerecht beschnitten werden. In der vorliegenden Beschreibung bezieht sich der Ausdruck "Koaxialkabel kleinen Querschnitts" auf Koaxialkabel mit Querschnitten von wenigen Millimetern. Der Ausdruck "dünnwandig" bezieht sich auf Wandstärken von weniger als 0,15 mm. Der Begriff NE-Metall wird in dieser Beschreibung sowohl für die Metalle selbst als auch für deren Legierungen verwendet.

Das in der passenden Breite vorliegende Metallband wird in einem ein- oder mehrstufigen kontinuierlichen Umformprozess zu einem Hohlprofil geformt, welches den gewünschten Querschnitt aufweist, und welches den äußeren Leiter des Koaxialkabels bildet. Der Umformprozess kann ein in mehreren Stufen nacheinander folgendes Biegen in Längsrichtung des Bandes umfassen, bspw. an entsprechend eingerichteten Rollen und Profilen. Der Querschnitt kann dabei rund, oval oder auch beliebig mehreckig sein. Vor oder während des Umformprozesses, vor dem Schließen des Hohlprofils, wird der Kabelkern zugeführt, der ein mit einem Dielektrikum ummantelten Innenleiter umfasst. Der Kabelkern kann weitere Schichten umfassen.

Das Hohlprofil, das den Kabelkern aufgenommen hat, weist nach dem Umformen einen in Längsrichtung des Hohlprofils verlaufenden Bereich auf, in dem die Kanten des Metallbandes bündig aneinander anliegen. Die bündig aneinander anliegenden Kanten des Hohlprofils werden nun entlang der Stoßkante miteinander verschweißt und so radial geschlossen. Erfindungsgemäß erfolgt das Verschweißen mit einem Laser, der Licht mit einer Wellenlänge kleiner als 600 nm ausstrahlt, vorzugsweise in einem Bereich zwischen 550 und 450 nm. Auch Wellenlängen in einem Bereich unterhalb 450 nm können erfindungsgemäß vorteilhaft genutzt werden. Der Laser bringt Lichtenergie in einen Punkt in dem Schweißbereich ein, die beim Auftreffen auf die Oberfläche des Schweißgutes absorbiert und in Wärme umgewandelt wird. Licht in den erfindungsgemäß genutzten genannten Wellenlängenbereichen wird von vielen NE-Metallen schon bei Raumtemperatur sehr viel besser absorbiert als bspw. Licht im Infrarot-Spektrum mit Wellenlängen oberhalb von etwa 800 nm. Tatsächlich wird Licht schon bei Wellenlängen oberhalb von etwa 600 nm von vielen NE-Metallen nur noch so schlecht absorbiert, so dass Laser mit besonders hohen Ausgangsleistungen und besondere Kühlmaßnahmen erforderlich wären, um das NE-Metall zu verschweißen. Darüber hinaus ist die Absorption bei Wellenlängen größer als 600 nm stark von der Beschaffenheit der Oberfläche abhängig, während der Einfluss der Oberflächenbeschaffenheit bei den erfindungsgemäß genutzten Wellenlängen stark zurückgeht. Zudem ist wegen der starken Temperaturabhängigkeit der Absorption gerade bei größeren Wellenlängen außerdem eine schnelle Regelung der in den aktiven Schweißbereich eingebrachten Energie erforderlich, was nahezu unmöglich zu implementieren ist, so dass die Qualität der Schweißnaht stark schwanken kann. Die erfindungsgemäße Verwendung von Licht mit Wellenlängen kleiner als 600 nm erzeugt ein stabileres Schmelzbad und führt zu einem insgesamt stabileren Prozess, der bei einem hohen energetischen Wirkungsgrad des Schweißprozesses längsnahtgeschweißte Hohlprofile mit einer hohen Qualität liefert und weniger Ausschuss produziert. Außerdem kann bei der erfindungsgemäß genutzten Wellenlänge kleiner als 600 nm eine Vorbereitung des Schweißbereichs entfallen, die eine Verringerung der Reflexion und dadurch eine Erhöhung der Absorption des Laserlichts bewirkt. Der Schweißbereich muss also nicht bspw. angeraut oder vorgeheizt werden, und es muss auch keine Schicht aus einem Stoff in dem Schweißbereich aufgebracht werden, welcher als "Vermittler" die eingestrahlte Lichtenergie in Wärme umwandelt und an das Schweißgut abgibt, so dass dessen temperaturabhängiger Absorptionsgrad in für die verwendete Wellenlänge günstigere Bereiche gelangt. Dadurch entfällt die Gefahr, dass Teile des als Vermittler verwendeten Stoffes in die Schweißnaht gelangen.

Das absorbierte Licht bewirkt eine starke Erwärmung des Metalls. Um eine ausreichend hohe Energie in das zu verschweißende Material einzubringen muss das Licht stark fokussiert werden. Eine starke Fokussierung ist auch deshalb erforderlich, weil das Verschweißen nur in dem Kontaktbereich der Kanten entlang des Schlitzes erfolgen soll. Aufgrund von Wärmeleitung innerhalb des NE-Metalls können unmittelbar an den Auftreffpunkt des Laserstrahls angrenzende Bereiche sich ebenfalls stark erwärmen und ggf. aufschmelzen. Gerade bei kleinen Querschnittsabmessungen der herzustellenden Hohlprofile, bspw. bei Durchmessern kleiner als 4 mm ist die Fokussierung des Laserstrahls daher von großer Bedeutung, um das unkontrollierte Abfließen von verflüssigtem Material bzw. einen Materialabriss zu vermeiden. Bei dem erfindungsgemäßen Verfahren weist der Laserstrahl am Werkstück einen Durchmesser von nicht mehr als 20% der Querschnittsabmessungen des Hohlprofils auf, vorzugsweise weniger als 10%. Versuche haben gezeigt, dass Durchmesser des Laserstrahls herunter bis zu 5% der Querschnittsabmessungen noch Schweißnähte mit einer guten Qualität ermöglichen können, wobei in diesem Fall weitere Maßnahmen erforderlich sein können, bspw. ein Bewegen des Fokuspunkts über den Schweißbereich. Bei einem Hohlprofil mit einem Durchmesser von 4 mm kann der Durchmesser des Laserstrahls demnach beispielsweise 400 µm betragen, vorzugsweise 200 µm oder weniger. Der in dieser Beschreibung verwendete Begriff Querschnittsabmessungen kann sich auf einen Durchmesser eines Hohlprofils beziehen, oder auf Kantenlängen. Je nach Kontext kann der Begriff sich auch auf Biegeradien von Kanten oder dergleichen beziehen.

Die hohe lokale Energiedichte am Auftreffpunkt des Laserstrahls auf das Werkstück bewirkt ein lokales Aufschmelzen des Materials beiderseits der Stoßkante, so dass die Schmelzen ineinanderfließen. Das Material erstarrt wieder, wenn es nicht mehr von dem Laserstahl getroffen wird, und bildet die Schweißnaht. Da das Hohlprofil, in welchem der Kabelkern aufgenommen ist, kontinuierlich an dem feststehenden Laser vorbeigeführt wird, wird eine kontinuierliche Schweißnaht erzeugt, die die beiden Kanten verbindet. Um unkontrolliertes Abfließen des flüssigen Materials zu verhindern, das ja in einer kleinen Wandstärke vorliegt, müssen die eingebrachte Laserleistung und die Geschwindigkeit, mit der das Rohr an dem Laser vorbeigeführt wird, aufeinander abgestimmt sein. Bei geeigneter Abstimmung ergeben sich an der Außen- wie an der Innenseite glatte Schweißnähte, die keiner Nachbearbeitung bedürfen.

Im Gegensatz zu dem bekannten Lichtbogenschweißen nach dem Wolfram-Inertgas-Verfahren (WIG) oder Metall-Inertgas-Verfahren (MIG), die ein Reagieren der Schmelze mit der Umgebungsluft durch die Intergas-Atmosphäre verhindern und dadurch hohe Nahtqualitäten ermöglichen, können bei dem bei der Erfindung genutzten Laserschweißen wegen der besseren Steuerbarkeit des Energieeintrags auch ohne Schutzgase NE-Metalle mit Materialdicken kleiner als 0,15 mm stumpf miteinander so verschweißt werden, dass sich keine Schweißwulst auf der wegen des Kabelkerns nicht mehr frei zugänglichen Innenseite des Rohres bildet. Bei Ausgestaltungen des Verfahrens ist die Schweißstelle trotzdem mit einem inerten Schutzgas, bspw. Argon, umströmt oder abgedeckt. Die Nutzung einer Schutzgasatmosphäre kann u.a. von dem zu verschweißenden Material und dessen Stärke abhängig sein.

Die Steuerung des Energieeintrags durch den Laser kann entweder über die Fokussierung auf ein größeres Zielgebiet erfolgen, so dass eine zur Verfügung stehende Energie je nach Bedarf auf eine größere oder kleinere Fläche wirkt, oder durch geeignetes Hin- und Herbewegen eines besonders eng fokussierten Laserstrahls. Die Fokussierung auf ein größeres Zielgebiet kann auch durch ein Laserprofil gebildet werden, das einen zentralen Fokuspunkt großer Intensität und einen den zentralen Fokuspunkt umgebenden ringförmigen Bereich geringerer Intensität aufweist. Dadurch kann der Schweißbereich entlang eines Temperaturprofils gezielt erhitzt bzw. abgekühlt werden, wodurch sich eine sauberere Schweißnaht ergeben kann, und das Erstarrungsgefüge gezielt beeinflusst werden kann. Außerdem können Laserstrahlen auf einfache Weise gepulst werden, wobei eine Steuerung des Energieeintrags bspw. über die Pulsdauer und den Pulsabstand erfolgt.

Das Schweißen mittels Laser, auch Wärmeleitungsschweißen genannt, erzeugt eine glatte, abgerundete Schweißnaht, die nicht mehr nachbearbeitet werden muss. Die Energie verteilt sich beim Wärmeleitungsschweißen außerhalb des Bereichs in dem der Laser auftrifft nur durch Wärmeleitung in das Werkstück. Deshalb beträgt die Nahttiefe - abhängig von der Laserleistung und der Wärmeleitfähigkeit des Materials - nur einige Zehntelmillimeter bis etwa 1 Millimeter. Die Wärmeleitfähigkeit des Werkstoffs begrenzt dabei die maximale Nahttiefe. In der Regel ist die Nahtbreite größer als die Nahttiefe. Wenn die Wärme nicht schnell genug abfließen kann, steigt die Bearbeitungstemperatur über die Verdampfungstemperatur, so dass
Metalldampf entsteht, und die Einschweißtiefe sprunghaft ansteigt. Der Prozess geht dann ins Tiefschweißen über.

Die aufgrund des fein steuerbaren Energieeintrags in die Schweißstelle hohe Qualität der Schweißnaht an der Außenseite und vor allem an der Innenseite des erfindungsgemäß hergestellten Rohres, die keine ausgeprägte Materialwulst entlang der Schweißnaht aufweist, erlaubt es, Koaxialkabel mit dünnen Wandstärken und kleinen Durchmessern in einem kontinuierlichen Prozess zu fertigen.

Bei einer oder mehreren Ausgestaltungen des Verfahrens wird die Breite des zugeführten Bandes gemessen und eine Schnittbreite in Abhängigkeit von dem Messergebnis und einem Vorgabewert nachgeführt. Die Breite entspricht etwa dem Umfang des den äußeren Leiter des Koaxialkabels bildenden Hohlprofils entlang der neutralen Faser. Dabei kann der Vorgabewert variiert und eine Umformvorrichtung entsprechend in Abhängigkeit von der variierenden Breite des Bandes angesteuert werden, bspw. um die für eine saubere Schweißnaht erforderliche Materialmenge anzupassen.

Bei Ausgestaltungen des Verfahrens wird ein Temperaturprofil quer zu der Schweißnaht gemessen. Das gemessene Temperaturprofil kann dazu genutzt werden, die in den Schweißpunkt eingebrachte Energie zu steuern. Das gemessene Temperaturprofil kann bspw. mit einem Vorgabeprofil verglichen werden, und die Steuerung der eingebrachten Energie kann eine Variation des Fokusdurchmessers, einer von dem Fokuspunkt auf dem Schweißgut beschriebenen Bahnkurve und/oder eine Veränderung der Pulsdauer und/oder des Pulsabstands des Laserstrahls umfassen. Es ist ebenfalls denkbar, die Zuführgeschwindigkeit in Abhängigkeit von dem gemessenen Temperaturprofil zu regeln. Das gemessene Temperaturprofil kann auch zu Qualitätsmanagements- und Dokumentationszwecken gespeichert werden.

Bei Ausgestaltungen des Verfahrens wird die Schweißnaht mit Ultraschall, Röntgen, einer Wirbelstrommessung oder anderen zerstörungsfreien Messverfahren überprüft. Die Ergebnisse der Überprüfung können bspw. zur Steuerung der in die Schweißstelle eingebachten Energie und/oder der Zuführgeschwindigkeit genutzt werden.

Bei Ausgestaltungen des Verfahrens wird eine auf das flache Band aus NE-Metall und/oder auf das verschweißte Koaxialkabel wirkende Zugkraft bestimmt, und anhand der zuvor bestimmten Zugkraft werden Antriebe geregelt, die das flache Band dem Umformen und/oder dem Schweißen zuführen und/oder das verschweißte Koaxialkabel einer Well- oder Aufnahmevorrichtung zuführen. Eine zu große Zugkraft kann insbesondere bei zugeführten Bändern mit sehr kleiner Dicke zum Reißen des Bandes führen, wodurch der Prozess unterbrochen würde. Ähnliches gilt für die auf das verschweißte Koaxialkabel wirkende Zugkraft.

Eine nicht beanspruchte Vorrichtung zur kontinuierlichen Herstellung von Koaxialkabeln mit einem dünnwandigen, radial geschlossenen äußeren Leiter aus NE-Metall umfasst eine zum Zuführen eines flachen Bandes des NE-Metalls eingerichtete Zuführeinrichtung. Die Zuführeinrichtung kann bspw. eine Halterung für ein auf einer Spule oder einem Coil aufgewickeltes flaches Band des NE-Metalls umfassen. Das Band wird von der Spule abgewickelt und einer Umformvorrichtung zugeführt, welche das flache Band aus NE-Metall so in das Profil des den äußern Leiter des Koaxialkabels bildenden Hohlprofils umformt, dass die gegenüberliegenden Kanten des flachen Bandes des NE-Metalls bündig stumpf aneinanderstoßen. Die Umformvorrichtung kann bspw. mehrere Rollen und Profile aufweisen, bspw. Ziehsteine, welche das Band beim Durchlaufen in Längsrichtung zu dem gewünschten Hohlprofil umformen. Die Umformvorrichtung kann außerdem zwei oder mehr in Längsrichtung des umgeformten Bandes bzw. Hohlprofils voneinander beabstandete Führungsmittel aufweisen, zwischen welchen die Kanten zumindest an einer zu verschweißenden Stelle bündig aneinander anliegend gehalten werden. Ggf. kann das Band an ein oder mehreren Stellen vor und im Werkzeug seitlich geführt werden um seitliche Bewegung des Bandes zu minimieren.

Die nicht beanspruchte Vorrichtung umfasst außerdem eine zum Zuführen eines auf die Abmessungen des Hohlprofils abgestimmten Kabelkerns eingerichtete Zuführeinrichtung. Der Kabelkern umfasst einen mit einem Dielektrikum ummantelten inneren Leiter und ggf. weitere Schichten. Die Zuführeinrichtung führt den Kabelkern in einer auf die Vorschubgeschwindigkeit des verschweißten Hohlprofils abgestimmten Geschwindigkeit zu.

Die nicht beanspruchte Vorrichtung umfasst ferner eine Schweißvorrichtung, welche die zwischen den Führungsmitteln bündig aneinander liegenden Kanten miteinander verschweißt. Die Schweißvorrichtung umfasst einen Laser, der Licht einer Wellenlänge kleiner 600 nm mit einer Energie ausstrahlt, die ein lokales Schmelzen des NE-Metalls zu beiden Seiten der Kanten bewirkt. Durch den kontinuierlichen Vorschub des umgeformten und verschweißten Hohlprofils bzw. des Koaxialkabels gelangen Bereiche, in denen das Material geschmolzen ist, aus dem Bereich heraus, in welchem der Laser das Material erhitzt, und das geschmolzene Material erstarrt wieder. Die in das Material zu dessen Erhitzung eingebrachte Energie ist auf das Material, dessen Dicke sowie die Geschwindigkeit abgestimmt, mit der das Hohlprofil bzw. das Koaxialkabel an der Schweißstelle vorbeigeführt wird, so dass das Material in einem unmittelbar an die bündig aneinander liegenden Kanten liegenden Bereich zwar geschmolzen wird, aber kein flüssiges Material in das Innere des Hohlprofils hineinläuft. Über die Führungsmittel kann der Abstand zwischen einer Optik des Lasers und den zu verschweißenden Kanten des Hohlprofils konstant gehalten werden. Um die Position der aneinander liegenden Kanten in Bezug auf die Optik des Lasers konstant zu halten kann vor den Führungsmitteln, die den Längsschlitz schließen, ein sogenanntes Schwert in dem zwischen den Kanten liegenden Längsschlitz angeordnet sein, um ein spiralförmiges Verdrehen zu verhindern.

Die nicht beanspruchte Vorrichtung umfasst zudem eine oder mehrere Vorschubeinrichtungen, welche das verschweißte Koaxialkabel zu einem Weller oder Corrugator weiterbefördern, der eine Schrauben- oder Parallelwellung in den Außenleiter des Koaxialkabels einbringt, bevor es zu einer Aufnahmeeinrichtung weiterbefördert wird, die das Koaxialkabel aufnimmt. Die Vorschubeinrichtung kann beispielsweise einen oder mehrere Spannzangenabzüge, Stollenabzüge, Scheibenabzüge oder Bandabzüge bekannter Bauart umfassen, wobei auch unterschiedliche Vorschubeinrichtungen kombiniert sein können. Vorschubeinrichtungen können sowohl vor als auch hinter dem Corrugator angeordnet sein.

Bei einer oder mehreren Ausgestaltungen der nicht beanspruchten Vorrichtung ist vor der Umformvorrichtung eine Messvorrichtung zur Ermittlung der Zugkraft vorgesehen. Die ermittelte Zugkraft kann einer Regelung als Istwert zugeführt werden und mit einem Sollwert zur Regelung der Antriebe der Vorrichtung eingesetzt werden, etwa um die Geschwindigkeit der Zuführung des Bandes aus NE-Metall zu regeln. Außerdem kann eine Mess- und/oder Regelvorrichtung hinter der Schweißeinrichtung angeordnet sein, welche die auf das verschweißte Hohlprofil bzw. Koaxialkabel ausgeübte Zugkraft misst und/oder den Antrieb der Vorschubeinrichtung regelt, welche das verschweißte Hohlprofil der Aufnahmeeinrichtung zuführt. Die Regelung der Ziehkraft zwischen der Vorschubeinrichtung und der Aufnahmeeinrichtung kann bspw. durch einen Tänzer erfolgen, der ein Durchhängen des verschweißten Hohlprofils bzw. Koaxialkabels erfasst und einer Antriebssteuerung der Aufnahmeeinrichtung entsprechende Signale zuführt.

Bei einer oder mehreren Ausgestaltungen umfasst die nicht beanspruchte Vorrichtung außerdem eine vor der Umformeinrichtung angeordnete Schneideeinrichtung, mittels derer eine oder beide Kanten des zugeführten flachen Bandes aus NE-Metall beschnitten werden, wobei die Breite des beschnittenen Bandes dem Umfang des den äußeren Leiter des Koaxialkabels bildenden Hohlprofils entspricht. Bei diesen Ausgestaltungen können ohne großen Aufwand Hohlprofile für Koaxialkabel mit unterschiedlichen Umfängen hergestellt werden, indem das zugeführte Metallband auf die erforderliche Breite zugeschnitten und die weiteren Werkzeuge der Vorrichtung angepasst werden.

An einer oder beiden Kanten des Bandes abgeschnittene Teile können bei einer oder mehreren Ausgestaltungen einer zur Aufnahme von Schnittresten vorgesehenen Vorrichtung zugeführt werden.

Bei einer oder mehreren Ausgestaltungen der mit einer Schneideeinrichtung ausgestatteten nicht beanspruchten Vorrichtung ist hinter der Schneideeinrichtung eine Messeinrichtung zur Messung der Breite des zugeschnittenen Bandes vorgesehen. Anhand der Messwerte kann die Schneideeinrichtung angesteuert werden, um eine gewünschte Breite des NE-Metallbandes über einen langen Zeitraum einzuhalten. Der Schneideeinrichtung können entsprechende Vorgabewerte zugeführt werden, mit denen die gemessene Breite des NE-Metallbandes verglichen werden um ein Steuersignal für die Einstellung der Schneideeinrichtung zu erzeugen. Die Breite entspricht etwa dem Umfang des den äußeren Leiter des Koaxialkabels bildenden Hohlprofils entlang der neutralen Faser.

Die Schweißvorrichtung kann dazu eingerichtet sein, auch bei langsamen Zuführgeschwindigkeiten des NE-Metallbandes die Kanten mit der geforderten Qualität zu verschweißen.

Bei einer oder mehreren Ausgestaltungen umfasst die nicht beanspruchte Vorrichtung außerdem eine Messeinrichtung zur Bestimmung eines Temperaturprofils quer zu der Schweißnaht. Das gemessene Temperaturprofil kann der Schweißvorrichtung zur Steuerung der abgegebenen Energie, der Zuführeinrichtung und/oder der Vorschubeinrichtung zur Steuerung der Zuführgeschwindigkeit zugeführt werden.

Bei einer oder mehreren Ausgestaltungen umfasst die nicht beanspruchte Vorrichtung außerdem eine Messeinrichtung zur Messung mindestens einer Abmessung des Koaxialkabels nach dem Verschweißen. Diese Messeinrichtung kann zur integrierten Qualitätskontrolle eingesetzt werden, genauso wie eine bei einer oder mehreren Ausgestaltungen vorgesehene Messeinrichtung zur Prüfung der Schweißnaht und/oder von Materialfehlern bzw. Inhomogenitäten des Materials. Die Abmessungen können vorzugsweise berührungslos gemessen werden, bspw. mittels Laser.

Bei einer oder mehreren Ausgestaltungen kann das gewellte Koaxialkabel nach dem Durchlaufen des Corrugators mit einer elektrischen Isolierung umhüllt werden, bspw. durch Umspritzen oder Umwickeln.

Mit dem vorstehend beschriebenen Verfahren, bei dem Laserlicht mit Wellenlängen kleiner als 600 nm zum Verschweißen von dünnwandigem NE-Metallblechen genutzt wird, können auf einfache Weise Hohlprofile mit Wandstärken unter 0,15 mm und Durchmessern bzw. Abmessungen kleiner als 4 mm auf einem hohen Qualitätsniveau ohne aufwendige Nachbearbeitung hergestellt werden, die im selben Arbeitsgang durch Einbringen eines Kabelkerns zu Koaxialkabeln weiterverarbeitet werden. Durch die Nutzung von Fokusdurchmessern des Laserstrahls von unter 400 µm wird beim kontinuierlichen Verschweißen eine ausreichend kleine Wärmeeinflusszone im Verhältnis zu den Abmessungen des Hohlprofils gewährleistet, so dass keine Materialabrisse auftreten und eine Schweißnaht erzeugt wird, die keine ausgeprägte Wulst auf der Rohrinnenseite aufweist. Wegen der direkten Herstellung des Hohlprofils aus NE-Metallbändern mit einer geringen Wandstärke kann auf ein anschließendes Ziehen des Rohres zur Verringerung der Wandstärke verzichtet werden, was wegen des bei Koaxialkabeln im Inneren des Hohlprofils liegenden Kabelkerns problematisch wäre.

Mit dem vorstehend beschriebenen Verfahren können ohne einen sich an das Verschweißen anschließenden Ziehprozess Koaxialkabel mit äußeren Leitern mit einer Wandstärke von 0,10 mm bei Schweißgeschwindigkeiten größer 6 m/min hergestellt werden, wobei die Schweißnahtqualität über mehrere Stunden konstant gehalten werden kann, so dass Koaxialkabel großer Längen herstellbar sind.

Die geringere Wandstärke des Außenleiters des Koaxialkabels führt zur Einsparung von Kupfer und anderen Legierungselementen und somit zur Schonung wertvoller Ressourcen. Eine Verringerung der Wandstärke reduziert die zur Schweißung erforderlichen Laserleistung, was wiederum Energieeinsparungen nach sich zieht oder alternativ eine Erhöhung der Prozessgeschwindigkeit bei gleicher Laserleistung ermöglicht.

In Hinblick auf das fertige Produkt erweist sich die dünnere Wandstärke des Außenleiters ebenfalls als Vorteil, führt sie doch zu einem geringeren längenbezogenen Gewicht, was den Transport und die Verlegung erleichtert.

Die dünnere Wandstärke ermöglicht außerdem kleinere Durchmesser in der Formung des äußeren Leiters. Hierdurch lässt sich der Außendurchmesser des Kabels bei gleicher Bauweise reduzieren. Dies führt neben der weiteren Gewichtsreduzierung zu geringeren Mindest-Biegeradien und damit zu mehr Flexibilität im Hinblick auf die Verlegung.

### Kurze Beschreibung der Zeichnung

Nachfolgend wird die Erfindung anhand einer Ausführungsform unter Bezugnahme auf die begleitenden Figuren exemplarisch näher erläutert. Alle Figuren sind rein schematisch und nicht maßstäblich. Es zeigen:
- Fig. 1: ein exemplarisches Beispiel des erfindungsgemäßen Verfahrens zur kontinuierlichen Herstellung von dünnwandigen radial geschlossenen Hohlprofilen,
- Fig. 2: ein exemplarisches Beispiel einer erfindungsgemäßen Vorrichtung zur kontinuierlichen Herstellung von dünnwandigen radial geschlossenen Hohlprofilen,
- Fig. 3: Bilder einer Schweißnaht eines nach dem erfindungsgemäßen Verfahren hergestellten Hohlprofils, und
- Fig. 4: zwei beispielhafte Koaxialkabel mit Schrauben- bzw. Parallelwellung.

Gleiche oder ähnliche Elemente sind in den Figuren mit gleichen oder ähnlichen Bezugszeichen versehen.

### Ausführungsbeispiel

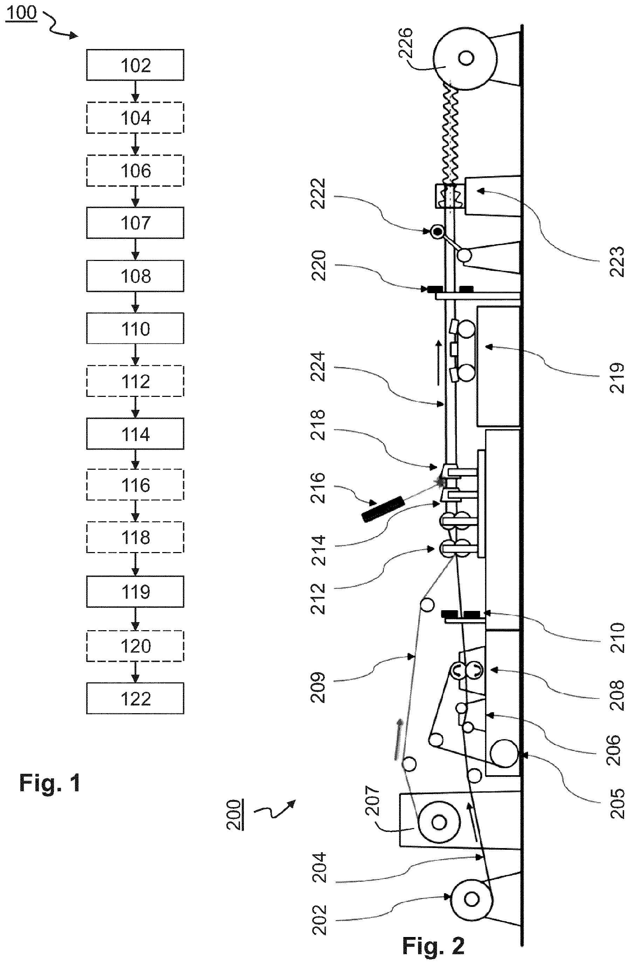

Figur 1 zeigt Schritte eines Verfahrens 100 zur Herstellung von Koaxialkabeln mit einem dünnwandigen, radial geschlossenen äußeren Leiter gemäß einem Aspekt der Erfindung. In Schritt 102 des Verfahrens wird ein flaches Band aus NE-Metall mit einer ersten Zuführgeschwindigkeit einer Umformvorrichtung zugeführt. Bspw. wird ein flaches Kupferband von einem Coil abgewickelt. In der Umformvorrichtung wird das zugeführte flache Band in Schritt 108 in eine dem gewünschten Hohlprofil des äußeren Leiters entsprechende Form umgeformt. Das Umformen kann bspw. mittels eines Roll-Formwerkzeugs erfolgen.

Während des Umformens, bevor das den äußeren Leiter bildende Hohlprofil vollständig geschlossen ist, wird ein Kabelkern zugeführt, der einen von einem Dielektrikum ummantelten Innenleiter und ggf. weitere Schichten umfasst. Der Kabelkern kann bspw. bereits in Schritt 107 unmittelbar vor der ersten Umformstufe zugeführt werden.

Vor dem Umformen kann in einer Schneideinrichtung ein optionaler Schritt 104 ausgeführt werden, in welchem eine oder beide Kanten des Bandes aus NE-Metall beschnitten oder auf andere Weise vorbereitet werden. Hierdurch kann auch bei schlechter Kantenqualität des Bandes aus NE-Metall die Breite des Bandes gleichmäßig und präzise eingestellt und ggf. und die Kanten für den anschließenden Schweißvorgang vorbereitet werden. Der Schneideinrichtung können Messwerte einer Messvorrichtung zugeführt sein, welche die Breite des NE-Metallbandes nach dem Beschneiden erfasst. Die Schnittreste können in einer entsprechenden Aufnahmevorrichtung aufgenommen werden.

Beim Umformen werden die Kanten des Bandes mittels Führungselementen so geführt, dass ein Verdrehen vor dem Verschweißen verhindert wird, und die bündig aneinander liegenden Kanten in einer definierten Lage und einem definierten Abstand an einer Schweißvorrichtung vorbeigeführt werden. Die Führungselemente können bspw. ein oder mehrere Finnpassscheiben oder Führungsschwerter sowie ein oder mehrere an die Geometrie des Hohlprofils angepasste Führungsbuchsen umfassen, welche an die zu fertigende Hohlgeometrie angepasst sind. Das Schließen der Geometrie kann bspw. mittels Ziehsteinen, Schließringen oder Seitenrollentufen erfolgen.

Nach dem Umformen liegen zwei gegenüberliegende Kanten des flachen Bandes in einem Kontaktbereich bündig aneinander an. In Schritt 110 werden die in dem Kontaktbereich bündig aneinander anliegenden Kanten kontinuierlich miteinander verschweißt. Das Verschweißen erfolgt mittels eines Lasers, der Licht einer Wellenlänge kleiner als 600 nm ausstrahlt. Ggfs. kann angepasst an die erforderliche Schweißnahtqualität eine Abdeckung der Schweißnaht mittels Schutzgas erfolgen.

Nach dem Verschweißen wird das Koaxialkabel mit dem nunmehr radial geschlossenen äußeren Leiter aus dem Schweißbereich abgezogen, Schritt 114, und in Schritt 119 eine Schrauben- oder Parallelwellung in den äußeren Leiter eingebracht, bevor das nun gewellte Koaxialkabel in Schritt 122 einer Aufnahmeeinrichtung zur Aufnahme zugeführt wird. Das Abziehen erfolgt mittels einer Vorschubeinrichtung, bspw. mittels Spannzangenabzug, Stollenabzug oder Bandabzug. Die Vorschubeinrichtung kann vor oder hinter dem Weller oder Corrugator angeordnet sein, es ist auch möglich zwei Vorschubeinrichtungen vorzusehen, jeweils eine vor dem Weller oder Corrugator und eine dahinter.

Zur Überwachung der Qualität der Schweißnaht kann in einem optionalen Schritt 112 das Temperaturprofil quer zur Schweißnaht bestimmt werden. Das ermittelte Temperaturprofil kann einer Steuerung des Lasers und anderer Elemente einer das Verfahren implementierenden Vorrichtung zugeführt werden, insbesondere auch einem oder mehreren Antrieben, welche die Zuführgeschwindigkeit des Bandes aus NE-Metall bzw. die Geschwindigkeit regeln, mit der das verschweißte Koaxialkabel aus dem Schweißbereich abgezogen wird.

Das Verfahren kann optional auch eine Ermittlung der Zugkraft auf das Band vor dem Umformen, Schritt 106, und/oder auf das Koaxialkabel nach dem Verschweißen, Schritt 120, umfassen. Die ermittelte Zugkraft kann ebenfalls den einem oder mehreren Antrieben als Messgröße zur Regelung zugeführt werden.

Das Verfahren kann außerdem einen optionalen Schritt 116 umfassen, in welchem eine oder mehrere Abmessungen des verschweißten Koaxialkabels bestimmt werden. Die ermittelten Abmessungen können vor allem als Eingangsgrößen zur Regelung des Umformvorgangs und des Schneidvorgangs zur Einstellung der Breite des Bandes zugeführt werden.

Das Verfahren kann außerdem einen optionalen Schritt 118 umfassen, in dem die Qualität der Schweißnaht und/oder das Schweißgut zerstörungsfrei auf Materialfehler überprüft werden, bspw. mittels Wirbelstromprüfung, Ultraschall oder Röntgen.

In der Figur nicht dargestellt sind anschließende Prozesse mittels derer das Hohlprofil in Teilstücke geschnitten wird, eine Ummantelung des Koaxialkabels mit einer Isolierschicht erfolgt oder Kabel mit Steckern konfektioniert werden.

Figur 2 zeigt ein exemplarisches Beispiel einer nicht beanspruchten Vorrichtung zur kontinuierlichen Herstellung von Koaxialkabeln mit einem dünnwandigen, radial geschlossenen äußeren Leiter. Von einem Wickel oder Abwickler 202 wird ein dünnes Band 204 aus NE-Metall abgewickelt, bspw. ein Band aus Kupfer. Das Band 204 wird einem Roll-Formwerkzeug 212 zugeführt, mittels dessen es in die Form des gewünschten Hohlprofils des äußeren Leiters gebracht wird, bspw. zu einem längsgeschlitzten Rundrohr geformt wird. Zwischen dem Wickel oder Abwickler 202 und dem Roll-Formwerkzeug 212 kann eine Schneidvorrichtung 208 vorgesehen sein, welche das Band 204 auf eine benötigte Breite zuschneidet bzw. eine oder beide Kanten des Bandes 204 zuschneidet, um saubere und glatte Kanten zu erhalten. Zur Aufnahme abgeschnittener Teile des Bandes 204 kann eine Aufnahmevorrichtung 205 vorgesehen sein. Die Breite des zugeschnittenen Bandes 204 kann in einer Bandbreiten-Messvorrichtung 210 überprüft werden. Die Messergebnisse können der Schneideeinrichtung 208 zur Regelung zugeführt sein. Außerdem kann zwischen dem Wickel oder Abwickler 202 und dem Roll-Formwerkzeug 212 eine Messvorrichtung 206 zur Ermittlung der Zugkraft angeordnet sein, deren Messwerte bspw. zur Regelung von Antrieben der Vorrichtung verwendet werden können. Vor dem Schließen des den äußeren Leiter bildenden Hohlprofils wird von einer Zuführvorrichtung 207 ein Kabelkern 209 zugeführt, der nach der Umformung des flachen Bandes aus NE-Metall in dem Hohlprofil aufgenommen ist. Die nach dem Formen des den äußeren Leiter bildenden Hohlprofils aneinander liegenden Kanten des Bandes können mit einem oder mehreren Führungselementen 214 vor der Laser-Schweißvorrichtung 216 eingehalten wird. Die Führungselemente können ein oder mehrere Finpassscheiben oder Führungsschwerter und ein oder mehrere an das den äußeren Leiter bildende Hohlprofil angepasste Führungsbuchsen umfassen. Die Geometrie des zu verschweißenden Hohlprofils wird mittels Ziehsteinen, Schließringen, Seitenrollenstufen oder Führungsbuchsen 218 geschlossen, so dass die Kanten des zu dem Hohlprofil umgeformten Bandes 204 im Bereich der Laser-Schweißvorrichtung 216 aneinander anliegen. Die Laser-Schweißvorrichtung 216 strahlt hochenergetisches Licht bei einer Wellenlänge kleiner als 600 nm aus, vorzugsweise in einem Bereich zwischen 550 und 450 nm. Auch Wellenlängen in einem Bereich unterhalb 450 nm können erfindungsgemäß vorteilhaft genutzt werde. Der Schweißbereich kann über eine in der Figur nicht dargestellte Schutzgasvorrichtung mit einem Schutzgas, bspw. Argon, abgedeckt werden, um Reaktionen des Schweißgutes mit der Atmosphäre zu unterbinden. Der Vorschub des verschweißten Koaxialkabels 224 erfolgt mittels einer Vorschubeinrichtung 219. Die Vorschubeinrichtung 219 kann bspw. einen oder mehrere Spannzangenabzüge, Stollenabzüge, Scheibenabzüge oder Bandabzüge umfassen, oder Kombinationen davon. Vor dem Aufwickeln des verschweißten Koaxialkabels 224 auf einem Aufwickler 226 können eine oder mehrere Abmessungen des Koaxialkabels 224 mittels eines Messgeräts 220 erfasst werden, vorzugsweise berührungslos, und eine Schrauben- oder Parallelwellung mittels eines Wellers oder Corrugators 223 in das Koaxialkabel eingebracht werden. Zur Erfassung der auf das Koaxialkabel 224 wirkendenden Zugkräfte kann eine weitere Zugkraft-Messvorrichtung 222 vor dem Aufwickler 226 vorgesehen sein.

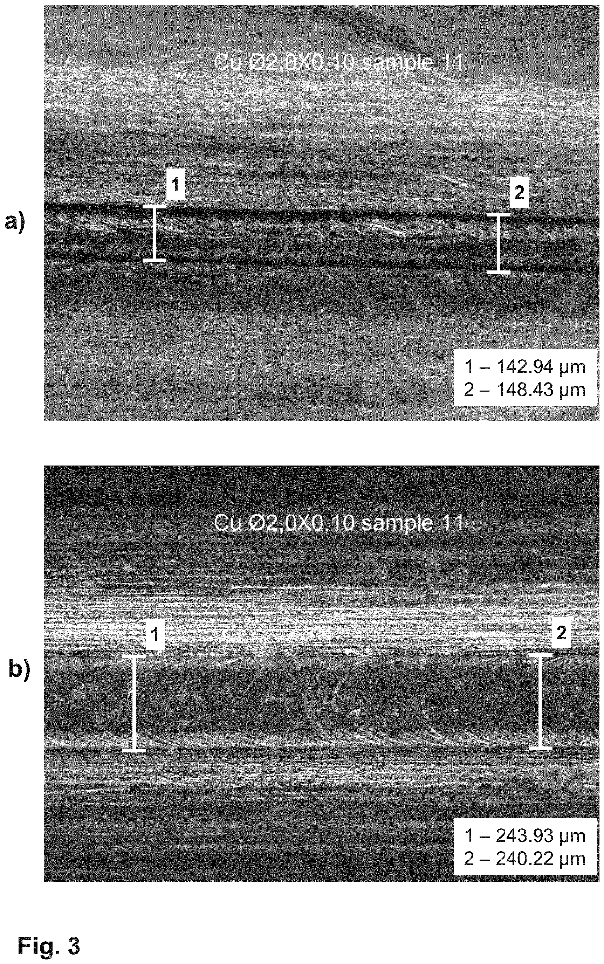

Figur 3 zeigt Bilder einer Schweißnaht eines nach dem erfindungsgemäßen Verfahren hergestellten Hohlprofils. Das Hohlprofil ist ein Kupferrohr mit einer Wanddicke von 0,1 mm, das bei einer Vorschubgeschwindigkeit von 6 m/min kontinuierlich aus einem Kupferband umgeformt und verschweißt wurde. Die Schweißstelle war dabei mit Argon abgedeckt. Figur 3 a) zeigt die Schweißnaht an der Außenseite des Hohlprofils, die eine Breite zwischen 140 und 150 µm aufweist. Figur 3 b) zeigt eine Aufnahme der Innenseite des Hohlprofils, auf der die Schweißnaht eine Breite von etwa 242 µm aufweist. Gut zu erkennen ist auch, dass die Schweißnähte sowohl innen als auch außen sehr gleichmäßig ausfallen, so dass eine Nachbearbeitung für die meisten Anwendungsfälle nicht erforderlich sein dürfte.

Figur 4 zeigt zwei beispielhafte Koaxialkabel 500, 502 mit Schraubenwellung bzw. Parallelwellung. Die Koaxialkabel 500, 502 sind ansonsten von konventionellem Aufbau mit einem von einem Dielektrikum 506 umgebenen inneren Leiter 504 und einem schraubenförmig bzw. parallel gewellten äußeren Leiter 508 bzw. 510. Die äußeren Leiter 508, 510 sind von einer äußeren Isolierschicht 512 umgeben.

### Bezuaszeichenliste

| | | | |
|---|---|---|---|
| 1 | Rohr | 214 | Führungselement |
| 2 | Form | 216 | Laser-Schweißvorrichtung |
| 3 | Stopfen | 218 | Ziehstein/Führungsbuchsen |
| 100 | Verfahren | 219 | Vorschubeinrichtung |
| 102 | Band zuführen | 220 | Messgerät |
| 104 | Zugkraft bestimmen | 222 | Zugkraft-Messvorrichtung |
| 106 | Kanten beschneiden | 223 | Weller/Corrugator |
| 107 | Kabelkern zuführen | 224 | Koaxialkabel |
| 108 | Hohlprofil formen | 226 | Aufwickler |
| 110 | Verschweißen | 500 | Koaxialkabel (Schraubenwellung) |
| 112 | Temperaturprofil bestimmen | 502 | Koaxialkabel (Parallelwellung) |
| 114 | Hohlprofil abziehen | 504 | innerer Leiter |
| 116 | Abmessungen bestimmen | 506 | Dielektrikum |
| 118 | Qualität bestimmen | 508 | äußerer Leiter |
| 119 | Wellen | 510 | äußerer Leiter |
| 120 | Zugkraft bestimmen | 512 | Isolierschicht |
| 122 | zur Aufnahmeeinrichtung zuführen | | |
| 200 | Vorrichtung | | |
| 202 | Wickel/Abwickler | | |
| 204 | Band aus NE-Metall | | |
| 205 | Aufnahmevorrichtung für Verschnitt | | |
| 206 | Zugkraft-Messvorrichtung | | |
| 207 | Zuführvorrichtung | | |
| 208 | Schneideeinrichtung | | |
| 209 | Kabelkern | | |
| 210 | Bandbreiten-Messvorrichtung | | |
| 212 | Roll-Formwerkzeug | | |

## Patentansprüche

1. Verfahren (100) zur kontinuierlichen Herstellung von Koaxialkabeln (224) mit einem radial geschlossenen äußeren Leiter aus NE-Metall mit einer Wandstärke von weniger als 0,15 mm, umfassend:
- Zuführen (102) eines flachen Bandes (204) des NE-Metalls mit einer ersten Zuführgeschwindigkeit zu einer Umformvorrichtung (212), wobei die Dicke des Bandes der Wandstärke des herzustellenden Hohlprofils (224) entspricht,
- Zuführen (107) eines mit einem Dielektrikum ummantelten inneren Leiters,
- kontinuierliches Umformen (108) des zugeführten flachen Bandes (204) in eine dem äußeren Leiter des Koaxialkabels (224) entsprechende Form, wobei zwei gegenüberliegende Kanten des flachen Bandes (204) nach dem Umformen in einem sich in Längsrichtung des Hohlprofils erstreckenden Kontaktbereich bündig aneinander anliegen, und wobei der von einem Dielektrikum ummantelte innere Leiter vor dem Schließen des den äußeren Leiter bildenden Hohlprofils zugeführt wird, so dass der von dem Dielektrikum ummantelte innere Leiter in dem Hohlprofil liegt,
- kontinuierliches Verschweißen (110) der in dem Kontaktbereich bündig aneinander anliegenden Kanten ohne vorherige Behandlung zur Reduzierung von optischen Reflexionen, wobei die zu verschweißenden Kanten mit der ersten Zuführgeschwindigkeit an einem in Bezug auf eine das Verfahren implementierende Vorrichtung (200) feststehenden Schweißbereich vorbeigeführt werden, und wobei ein Punkt in dem Schweißbereich mittels eines Lasers (216) erhitzt wird, welcher Licht einer Wellenlänge kleiner als 600 nm abstrahlt, und wobei der erhitzte Punkt einen Durchmesser aufweist, der kleiner als 20% der Querschnittsabmessung des Hohlprofils ist,
- Abziehen (114) des verschweißten Koaxialkabels (224) aus dem Schweißbereich,
- Einbringen (119) einer Schrauben- oder Parallelwellung in den äußeren Leiter des Koaxialkabels (224) ohne zuvor die Querschnittsabmessungen und/oder die Wandstärke durch einen auf das Verschweißen folgenden Ziehprozess zu verringern, und
- Aufnehmen (120) des Koaxialkabels (224) in einer Aufnahmeeinrichtung (226).

2. Verfahren (100) nach Anspruch 1, wobei zumindest der Schweißbereich beim Erhitzen mit einem inerten Schutzgas umströmt oder abgedeckt ist.

3. Verfahren (100) nach Anspruch 1 oder 2, außerdem umfassend:
- Beschneiden (106) einer oder zweier Kanten des flachen Bandes des NE-Metalls vor dem Umformen.

4. Verfahren (100) nach Anspruch 3, außerdem umfassend:
- Messen der Breite des beschnittenen Bandes des NE-Metalls vor und/oder Messen (116) zumindest einer Abmessung des Koaxialkabels (224) nach dem Verschweißen, und
- Regeln der Schnittbreite und/oder Ansteuern einer Vorrichtung (212) zum Umformen in Abhängigkeit von dem Messergebnis und einem Vorgabewert.

5. Verfahren (100) nach einem der vorhergehenden Ansprüche, außerdem umfassend:
- Messen (112) des Temperaturprofils quer zu der Schweißnaht und steuern der in den Schweißbereich eingebrachten Energie in Abhängigkeit von einem Vergleich des Temperaturprofils mit einem Vorgabeprofil.

6. Verfahren (100) nach einem der vorhergehenden Ansprüche, außerdem umfassend:
- Überprüfen (118) der Schweißnaht mittels Ultraschall, Wirbelstrommessung und/oder Röntgen.

7. Verfahren (100) nach einem der vorhergehenden Ansprüche, außerdem umfassend:
- Bestimmen (104, 122) der Zugkraft auf das flache Band des NE-Metalls und/oder das verschweißte Koaxialkabel (224), und
- Regeln von Antrieben, die das flache Band und/oder das verschweißte Koaxialkabel (224) dem Umformen, dem Schweißen, dem Wellen und/oder dem Aufnehmen in einer Aufnahmevorrichtung (226) zuführen.

## Claims

1. A method (100) for continuously producing coaxial cables (224) with a radially closed outer conductor from non-ferrous metal with a wall thickness of less than 0.15 mm, comprising:
- Feeding (102) a flat strip (204) of non-ferrous meal with a first feeding speed to a forming device (212), wherein the thickness of the strip corresponds to a wall thickness of the hollow profile (224) to be produced,
- feeding (107) an inner conductor coated with a dielectric,
- continuous forming (108) of the fed flat strip (204) into a shape corresponding to the outer conductor of the coaxial cable (224), wherein two opposite edges of the flat strip (204) abut flush against each other after the forming in a contact region extending in the longitudinal direction of the hollow profile, and wherein the inner conductor coated by a dielectric is fed before the closing of the hollow profile forming the outer conductor, so that the inner conductor coated by the dielectric lies in the hollow profile,
- continuous welding (110) of the edges that abut flush against each other in the contact region without prior treatment to reduce optical reflections, wherein the edges to be welded are guided at the first feeding speed past a fixed welding area in relation to a device (200) implementing the process, and wherein a point in the welding area is heated by means of a laser (216), which emits light with a wavelength of less than 600 nm, and wherein the heated point has a diameter, which is smaller than 20% of the cross section dimension of the hollow profile,
- pulling (114) the welded coaxial cable (224) out of the welding area,
- inserting (119) a helical or parallel corrugation in the outer conductor of the coaxial cable (224) without first reducing the cross section dimensions and/or the wall thickness by means of a drawing process following the welding, and
- receiving (120) the coaxial cable (224) in a receiving device (226).

2. The method (100) according to claim 1, wherein at least the welding area is surrounded or covered with an inert shielding gas during heating.

3. The method (100) according to claim 1 or 2, also comprising:
- Trimming (106) one or two edges of the flat strip of non-ferrous metal before the forming.

4. The method (100) according to claim 3, also comprising:
- Measuring the width of the trimmed strip of non-ferrous metal before and/or measuring (116) at least one dimension of the coaxial cable (224) after the welding, and
- controlling the cutting width or actuating a device (212) for the forming depending on the measurement result and a default value.

5. The method (100) according to any one of the preceding claims, also comprising:
- Measuring (112) the temperature profile across the weld seam and controlling the energy introduced into the welding area depending on a comparison of the temperature profile with a default profile.

6. The method (100) according to any one of the preceding claims, also comprising:
- Checking (118) the weld seam by means of ultrasound, eddy current measurement or X-raying.

7. The method (100) according to any one of the preceding claims, also comprising:
- Determining (104, 122) the tensile force on the flat strip of non-ferrous metal and/or the welded coaxial cable (224), and
- controlling drives that feed the flat strip and/or the welded coaxial cable (224) to the forming, the welding, the corrugating and/or the receiving in a receiving device (226).

## Revendications

1. Procédé (100) de fabrication en continu de câbles coaxiaux (224) avec un conducteur externe radialement fermé en métal non-ferreux avec une épaisseur de paroi inférieure à 0,15 mm, comprenant :
- l'introduction (102) d'une bande plate (204) du métal non-ferreux avec une première vitesse d'introduction dans un dispositif de formage (212), dans lequel l'épaisseur de la bande correspond à l'épaisseur de paroi du profilé creux (224) à fabriquer,
- l'introduction (107) d'un conducteur interne entouré d'un diélectrique,
- le formage en continu (108) de la bande plate (204) introduite en une forme correspondante au conducteur externe du câble coaxial (224), dans lequel deux arêtes opposées de la bande plate (204) s'appuient l'une contre l'autre en affleurement dans une partie de contact s'étendant dans la direction longitudinale du profilé creux, et dans lequel le conducteur interne entouré d'un diélectrique est introduit avant la fermeture du profilé creux formant le conducteur externe, de sorte que le conducteur interne entouré du diélectrique se trouve dans le profilé creux,
- la soudure en continu (110) des arêtes s'appuyant l'une contre l'autre en affleurement dans la partie de contact sans traitement préalable afin de réduire les réflexions optiques, dans lequel les arêtes à souder sont passées, avec la première vitesse d'introduction, devant une partie de soudure fixe par rapport à un dispositif (200) exécutant le procédé et dans lequel un point dans la partie de soudure est chauffé au moyen d'un laser (216), qui émet une lumière d'une longueur d'onde inférieure à 600 nm et dans lequel le point chauffé présente un diamètre inférieur à 20 % de la dimension de la section transversale du profilé creux,
- extraction (114) du câble coaxial (224) soudé hors de la partie de soudure,
- réalisation (119) d'une ondulation de vissage ou d'une ondulation parallèle dans le conducteur externe du câble coaxial (224) sans réduire préalablement les dimensions de section transversale et/ou l'épaisseur de paroi, à l'aide d'un étirage suivant la soudure et
- le logement (120) du câble coaxial (224) dans un dispositif de logement (226).

2. Procédé (100) selon la revendication 1, dans lequel au moins la partie de soudure est entourée ou recouverte, lors du chauffage, avec un gaz de protection inerte.

3. Procédé (100) selon la revendication 1 ou 2, comprenant en outre :
- la découpe (106) d'une ou de deux arêtes de la bande plate du métal non-ferreux avant le formage.

4. Procédé (100) selon la revendication 3, comprenant en outre :
- la mesure de la largeur de la bande découpée du métal non-ferreux avant la soudure et/ou la mesure (116) d'au moins une dimension du câble coaxial (224) après la soudure et
- la régulation de la largeur de coupe et/ou le contrôle d'un dispositif (212) pour le formage en fonction du résultat de mesure et d'une valeur de consigne.

5. Procédé (100) selon l'une des revendications précédentes, comprenant en outre :
- la mesure (112) du profil de température transversalement par rapport au cordon de soudure et le contrôle de l'énergie apportée à la partie de soudure en fonction d'une comparaison du profil de température avec un profil de consigne.

6. Procédé (100) selon l'une des revendications précédentes, comprenant en outre :
- la vérification (118) du cordon de soudure au moyen d'ultrasons, d'une mesure des courants de Foucault et/ou de rayons X.

7. Procédé (100) selon l'une des revendications précédentes, comprenant en outre :
- la détermination (104, 122) de la force de traction sur la bande plate du métal non-ferreux et/ou sur le câble coaxial (224) soudé et
- la régulation des entraînements, qui introduisent la bande plate et/ou le câble coaxial (224) soudé dans le formage, la soudure, l'ondulation et/ou le logement dans un dispositif de logement (226).
